# EUROPÄISCHE PATENTSCHRIFT

(11) **EP 0 406 723 B1**
(45) Veröffentlichungstag und Bekanntmachung des Hinweises auf die Patenterteilung: **17.08.1994**
(21) Anmeldenummer: 90112459.4
(22) Anmeldetag: 29.06.1990
(51) Int. Cl.: G01L 21/00, G01L 19/08, G01L 21/34

(54) **Messwertaufnehmer zur Vakuummessung**
Transducer for vacuum measurement
Transducteur pour la mesure de vide

(30) Priorität: 01.07.1989 DE 8908069 U
(43) Veröffentlichungstag der Anmeldung: 09.01.1991
(73) Patentinhaber: LEYBOLD AKTIENGESELLSCHAFT, D-63450 Hanau (DE)
(72) Erfinder: Koopmann, Theo, D-5024 Brauweiler (DE); Schoroth, Anno, D-5330 Königswinter (DE)
(74) Vertreter: Leineweber, Jürgen, Dipl.-Phys.

(56) Entgegenhaltungen:
- EP-A- 0 176 735
- DE-U- 8 134 476
- ATP/AUTOMATISIERUNGSTECHNISCHE PRAXIS, Band 30, Nr. 9, September 1988, Seiten 417-429, München, DE; H.-J. SCHNEIDER: "Sensorsysteme für die Betriebsmesstechnik"

## Beschreibung

Die Erfindung bezieht sich auf einen als Transmitter ausgeführten Meßwertaufnehmer für ein Vakuummeter.

Bei Meßwertaufnehmern für die Vakuummessung besteht das besondere Problem, daß die jeweiligen Sensoren klein und/oder empfindlich sind, einen hohen elektrischen Versorgungsaufwand benötigen und relativ kleine Signale (beispielsweise Stromsignale in der Größenordnung von einigen µ-Ampere) liefern. Neben dem hohen Versorgungsaufwand ist deshalb auch ein hoher elektronischer Aufwand für die Signalaufbereitung erforderlich. Schließlich sind die Gesamtsysteme sehr komplex, so daß zusätzliche Überwachungs- und Steuerungssysteme notwendig sind.

Beispiele für Vakuummeßgeräte, die den geschilderten Elektronik-Aufwand erfordern, sind die Ionisationsvakuummeter. Diese messen den Druck über die Teilchenzahldichte. Ein Teil der sich im Gasraum befindenden Moleküle oder Atome wird ionisiert. Die erzeugten Ionen geben ihre Ladung an eine Elektrode des Systems ab. Der so erzeugte, sehr kleine Ionenstrom ist ein Maß für den Druck. Die Bildung der Ionen erfolgt entweder in einer Entladung bei hoher elektrischer Feldstärke oder durch Stoß mit Elektronen. Ionisationsvakuummeter benötigen deshalb entweder eine Hochspannungsversorgung oder eine Stromversorgung für den relativ hohen Heizstrom sowie eine Anodenspannung. Wegen der sehr kleinen Meßspannungen ist außerdem ein hoher Signalaufbereitungsaufwand erforderlich.

Ein weiteres Beispiel für ein Vakuummeßgerät mit einem Sensor, der einen besonders hohen Versorgungsaufwand erfordert, ist das Gasreibungsvakuummeter. Bei diesem Gerät wird die bei niedrigen Gasdrücken druckabhängige Gasreibung zur Erzeugung eines Meßsignales genutzt. Als Meßelement wird beispielsweise eine Stahlkugel verwendet, die in einem Magnetfeld berührungsfrei auf gehängt ist. Durch elektromagnetische Impulse wird diese Kugel in Rotation versetzt. Nach dem Erreichen einer hohen Drehzahl wird der Antrieb abgeschaltet, so daß die Drehzahl unter dem Einfluß der druckabhängigen Gasreibung mehr oder weniger rasch abnimmt. Die Drehzahlabnahme pro Zeiteinheit ist deshalb ein Maß für den herrschenden Druck.

Schließlich benötigen auch die Sensoren von Partialdruck-Vakuummeßgeräten einen hohen Versorgungsaufwand. Ihr Meßwertaufnehmer umfaßt einen Ionenquelle, ein Trennsystem und einen Ionenfänger. Ionenquelle und Trennsystem (Quadrupol, massendispersiven Ablenkfeld o. dgl.) benötigen zum Betrieb die verschiedensten Spannungen, das Quadrupol-Trennsystem beispielsweise eine hohe Gleichspannung sowie eine hochfrequente Wechselspannung.

Auf dem Markt angebotene Vakuummeter der geschilderten Art umfassen ein Betriebsgerät, das Bedien-, Anzeige, Versorgungs-Steuerungs- und Überwachungsfunktion hat. Dieses Betriebsgerät ist relativ groß und muß dort angeordnet werden, wo der zu überwachende Druck angezeigt und/oder die zugehörigen Meßwerte weiter verarbeitet werden. Der eigentliche Sensor muß sich aber dort befinden, wo sich der auf Druck zu überwachende Rezipient befindet. Eine störungsfreie Übertragung des relativ kleinen Sensor-Signales bis zum Betriebsgerät ist wegen nicht idealer Leitungen und/oder äußerer Störungen nicht über beliebige Distanzen möglich, so daß die vorbekannten Vakuummmeter nur dort eingesetzt werden können, wo der Abstand zwischen Betriebsgerät und Sensor nicht zu groß ist, d. h. daß sie nur begrenzt einsetzbar sind.

Der vorliegenden Erfindung liegt die Aufgabe zugrunde, ein Vakuummeßgerät der eingangs genannten Art derart zu gestalten, daß es auch dort zuverlässig einsetzbar ist, wo die Distanz zwischen dem Meßort und dem Überwachungsort relativ groß ist.

Erfindungsgemäß wird diese Aufgabe nach dem Anspruch 1 gelöst.

Ein Transmitter ist ein Meßwandler, der die Umformung der Signale eines Sensors durchführt, um diese an nachgeschaltete Auswertegeräte anzupassen. Da ein Transmitter die Auswertegeräte selbst nicht mehr umfaßt, kann sein Gehäuse wesentlich kleiner als das Gehäuse für die vorbekannten Vakuummeter-Betriebsgeräte sein. Es besteht deshalb die Möglichkeit, den Transmitter unmittelbar am Meßort oder zumindest in der Nähe des Meßortes unterzubringen, abhängig davon, ob sich der Sensor im Transmitter-Gehäuse befindet oder nicht. Die Übertragung der Signale des Sensors zur Signalverarbeitungs-Elektronik ist auch dann, wenn sich der Sensor nicht im Transmitter-Gehäuse befindet, wegen des geringen Abstandes ohne Störungen möglich. Die innerhalb des Transmitter-Gehäuses befindliche Elektronik dient der Spannungs-Versorgung sowie der Meßsignalaufbereitung und -wandlung in ein digitales oder analoges Ausgangssignal, vorzugsweise in ein genormtes Ausgangssignal mit vier bis zwanzig Milliampere. Die Übertragung dieses Ausgangssignales über weite Strecken, beispielsweise - beim Einsatz in einer großen Anlage - bis zu einem in einer Warte befindlichen Anzeigegerät, ist störungsfrei möglich. Auch Schaltungen für Steuerungszwecke und Zustandsüberwachungen können sich im Transmitter-Gehäuse befinden.

Ein Transmitter der erfindungsgemäßen Art kann mit einer Versorgungskleinspannung, üblicherweise 24 Volt Gleichspannung, betrieben werden. Diese Versorgungsspannung hat sich in größeren Anlagen durchgesetzt.

Eine besonders vorteilhafte Maßnahme besteht darin, eine galvanische Trennung von innerhalb des Transmitter-Gehäuses befindlichen Funktionsbereichen vorzunehmen. Dadurch ergeben sich ausgezeichnete Leistungsdaten und ein zuverlässiger Betrieb.

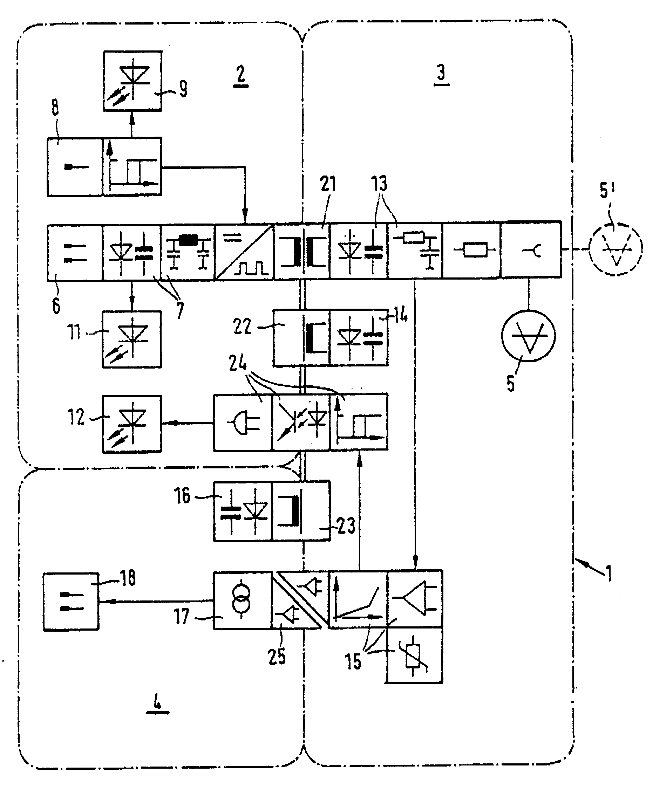

Weitere Vorteile und Einzelheiten der Erfindung sollen anhand eines in der Figur dargestellten Ausführungsbeispieles für Kaltkathoden-Ionisationsvakuummeter erläutert werden.

Die Figur zeigt einen erfindungsgemäß gestalteten Transmitter 1. Er ist aufgeteilt in drei Kreise, den Versorgungskreis 2, den Hochspannungs- und Signalaufbereitungskreis 3 und den Ausgangskreis 4. Der Sensor bzw. die Meßröhre befindet sich im Hochspannungs- und Signalaufbereitungskreis 3 und ist mit 5 bezeichnet. Alternativ kann sich die Meßröhre auch außerhalb des Transmitters 1 befinden. Diese Variante ist gestrichelt angedeutet; die Meßröhre ist mit 5' bezeichnet.

Bestandteile des Versorgungskreises 2 sind der zweipolige Versorgungsspannungsanschluß 6 (beispielsweise 24 V), ein Versorgungsspannungsfilter 7, eine einpolige Anschlußbuchse 8 zur fernsteuerbaren Ein- und Ausschaltung des Transmitters 1 sowie die Leuchtdioden 9, 11 und 12. Die Leuchtdiode 9 dient der Betriebs-Zustandsüberwachung. Die Leuchtdiode 11 zeigt den Versorgungszustand an. Die Leuchtdiode 12 dient - wie weiter unten noch erläutert - der Zustandsüberwachung des Penning-Meßsystems.

Im Hochspannungs- und Signalaufbereitungskreis 3 befinden sich die elektronischen Bauelemente 13 für die Hochspannungserzeugung, Schaltbauteile 14 für die Spannungsversorgung der im Kreis 3 befindlichen Bauelemente, verschiedene Stufen 15 für die Signalaufbereitung (wie Logarithmierer, Kennlinienentzerrung, Temperaturkompensation und dergleichen) sowie, wie bereits erwähnt, die Meßröhre 5, wenn sie nicht außerhalb angeordnet ist.
Durch eine logarithmische Entzerrung der Kennlinie (Ausgangssignal als Funktion des Druckes) wird eine einfache Zuordnung zum Meßwert über eine mathematisch beschreibbare Formel möglich. Tabellen sind nicht erforderlich.

Im Ausgangskreis 4 sind die Stufen zur Spannungsversorgung der in diesem Kreis befindlichen Bauteile mit 16 bezeichnet. Weiterhin befindet sich dort die Stromquelle 17 für die Erzeugung eines Ausgangssignales, beispielsweise zwischen 4 und 20 Milliampere. Über den Meßsignalausgang 18 gelangt das Ausgangssignal zum entfernt angeordneten, nicht dargestellten Anzeigegerät.

Die verschiedenen Kreise 2, 3 und 4 sind galvanisch voneinander getrennt. Dazu dient zunächst ein Transformator, der die in den Blöcken 21, 22 und 23 enthaltenen Wicklungen umfaßt. Mit Hilfe der Blöcke 21 und 22 erfolgt die galvanische Trennung der Kreise 2 und 3 in Bezug auf die Versorgungsspannung. Diese Aufgabe hat auch der Block 23 zum Zwecke der galvanischen Trennung der Kreise 2 und 4.

Um das Penning-Meßsystem im Kreis 3 mit Hilfe der im Kreis 2 befindlichen Leuchtdiode 12 überwachen zu können, sind die Schaltmittel 24 vorgesehen, die einen Optokoppler zur galvanischen Trennung der Kreise 2 und 3 umfassen.

Zur galvanischen Trennung im Bereich des Signalweges zwischen den Kreisen 3 und 4 dient die Stufe 25, über die die Schaltmittel 15 und 17 induktiv, kapazitiv oder optisch miteinander gekoppelt sind.

Zweckmäßig liefert der Transmitter ein Ausgangssignal im Bereich zwischen 4 und 20 mA. Um am Ausgangssignal erkennen zu können, ob die Meßröhre 5, 5′ betriebsbereit ist, d. h. ob das Penning gezündet hat, sind die Schaltmittel so ausgewählt bzw. die elektronischen Bauteile so bemessen, daß - solange das Penning nicht betriebsbereit ist - vom Ausgang 18 ein Meßwert geliefert wird, der außerhalb des Meßbereichs liegt, beispielsweise 2 mA.

## Patentansprüche

1. Als Transmitter (1) ausgeführter Meßwertaufnehmer für ein Vakuummeter mit einem Sensor (5, 5') sowie mit in einem Transmittergehäuse untergebrachten elektronischen Schaltungen zur Meßsignalaufbereitung und -wandlung der vom Sensor gelieferten Signale, dadurch gekennzeichnet, daß das Vakuummeter ein Ionisationsvakuummeter, ein Gasreibungsvakuummeter oder ein Partialdruck-Vakuummeter mit einem elektrisch zu versorgenden Sensor ist, daß die der Sensorversorgung dienenen elektronischen Schaltungen ebenfalls im Transmittergehäuse untergebracht sind, wobei im Transmittergehäuse ein Versorgungskreis (2), ein Hochspannungs- und Signalaufbereitungskreis (3) und ein Ausgangskreis (4) jeweils galvanisch voneinander getrennt untergebracht sind.

2. Meßwertaufnehmer nach Anspruch 1, dadurch gekennzeichnet, daß ein Transformator, ein Optokoppler oder dergleichen zur Herbeiführung der galvanischen Trennung der Kreise (2, 3, 4) dienen.

3. Meßwertaufnehmer nach einem der vorhergehenden Ansprüche, dadurch gekennzeichnet, daß sich der Sensor (5, 5') außerhalb des Transmitters (1) befindet.

4. Meßwertaufnehmer nach einem der vorhergehenden Ansprüche, dadurch gekennzeichnet, daß Leuchtdioden (9, 11, 12) für Zustandsüberwachungen vorgesehen sind.

5. Meßwertaufnehmer nach einem der vorhergehenden Ansprüche, dadurch gekennzeichnet, daß elektronische Bauteile (Stromquelle 17) zur Bildung eines Ausgangssignales im Bereich zwischen 4 und 20 Milliampere vorhanden sind.

6. Meßwertaufnehmer nach Anspruch 5, dadurch gekennzeichnet, daß elektronische Bauteile (Stromquelle 17) vorhanden sind, die - solange die Meßröhre (5, 5') nicht betriebsbereit ist - ein Ausgangssignal liefern, das außerhalb des Meßbereichs liegt und vorzugsweise zwei Milliampere beträgt.

7. Meßwertaufnehmer nach Anspruch 6, dadurch gekennzeichnet, daß Bestandteil der Signalaufbereitung (15) eine der Entzerrung der Ausgangssignalkennlinie dienende Logarithmierstufe ist.

## Claims

1. Measuring transducer constructed as a transmitter (1) for a vacuum meter having a sensor (5, 5') and with electronic circuits accommodated in a transmitter casing for the processing and transformation of the signals output by the sensor, characterized in that the vacuum meter is an ionisation vacuum meter, a gas friction vacuum meter or a partial pressure vacuum meter with a sensor requiring electrical supply, that the electronic circuits serving the sensor supply are also housed in the transmitter housing, with a supply circuit (2), a high-voltage and signal processing circuit (3) and an output circuit (4) being accommodated in the transmitter casing and electrically isolated from one another.

2. Measuring transducer according to claim 1,
characterized in that a transformer, and optocoupler or similar device are used to provide electrical isolation of the circuits (2, 3, 4).

3. Measuring transducer according to one of the preceding claims, characterized in that the sensor (5, 5') is located outside the transmitter (1).

4. Measuring transducer according to one of the preceding claims, characterized in that light-emitting diodes (9, 11, 12) are provided for status monitoring.

5. Measuring transducer according to one of the preceding claims, characterized in that electronic components (power supply unit 17) are provided to supply an output signal in the range between 4 and 20 milliamperes.

6. Measuring transducer according to claim 5,
characterized in that electronic components (power supply 17) are provided, which deliver an output signal lying outside the measuring range, preferably at two milliamperes, as long as the measuring tubes (5, 5') are not in the stand-by mode.

7. Measuring transducer according to claim 6,
characterized in that one component in the signal processing circuit (15) is a logarithmic stage serving to correct the output signal characteristic.

## Revendications

1. Dispositif de saisie de valeurs de mesure, réalisé sous forme d'un transmetteur (1), pour un manomètre à vide, comportant un capteur (5, 5') ainsi que des circuits électroniques, logés dans un boîtier du transmetteur, pour la préparation et la conversion des signaux de mesure fournis par le capteur, caractérisé par le fait que le manomètre à vide est un manomètre à vide à ionisation, un manomètre à vide à frottement par le gaz ou un manomètre à vide à pression partielle avec un capteur à alimenter en électricité, par le fait que les circuits électroniques servant à l'alimentation du capteur sont également logés dans le boîtier du transmetteur, étant précisé que dans le boîtier du transmetteur sont logés un circuit d'alimentation (2), un circuit de haute tension et de préparation des signaux (3) et un circuit de sortie (4), galvaniquement séparés chacun l'un de l'autre.

2. Dispositif de saisie de valeurs de mesure selon la revendication 1, caractérisé par le fait qu'un transformateur, un coupleur optique ou analogue servent à réaliser la séparation galvanique des circuits (2, 3, 4).

3. Dispositif de saisie de valeurs de mesure selon l'une des revendications précédentes, caractérisé par le fait que le capteur (5, 5') se trouve à l'extérieur du transmetteur (1).

4. Dispositif de saisie de valeurs de mesure selon l'une des revendications précédentes, caractérisé par le fait que des diodes électroluminescentes (9, 11, 12) sont prévues pour des surveillances d'état.

5. Dispositif de saisie de valeurs de mesure selon l'une des revendications précédentes, caractérisé par le fait qu'il existe des composants électroniques (source de courant 17) pour la formation d'un signal de sortie sur la plage entre 4 et 20 milliampères.

6. Dispositif de saisie de valeurs de mesure selon la revendication 5, caractérisé par le fait qu'il existe des composants électroniques (source de courant 17) qui - aussi longtemps que le tube de mesure (5, 5') n'est pas prêt à fonctionner - fournissent un signal de sortie qui se situe à l'extérieur de la plage de mesure et vaut de préférence deux milliampères.

7. Dispositif de saisie de valeurs de mesure selon la revendication 6, caractérisé par le fait que la partie constitutive de la préparation des signaux (15) est un étage logarithmique servant à corriger la distorsion de la caractéristique des signaux de sortie.
